# EUROPEAN PATENT APPLICATION

(11) **EP 4 583 174 A1**
(43) Date of publication of application: **09.07.2025**
(21) Application number: 23859754.6
(22) Date of filing: 01.06.2023
(51) Int. Cl.: H01M 4/02, H01G 2/24, H01G 11/06, H01G 11/70, H01M 4/13, H01M 10/04

(54) **ELECTRODE PLATE, ELECTRODE BODY, AND BATTERY**

(30) Priority: 29.08.2022 JP 2022136245
(71) Applicant: Panasonic Energy Co., Ltd., Osaka 570-8511 (JP)
(72) Inventor: ISHIKAWA Toshiki, Kadoma-shi, Osaka 571-0057 (JP); DAVIS Jerome, Kadoma-shi, Osaka 571-0057 (JP); OOTA Satoshi, Kadoma-shi, Osaka 571-0057 (JP)
(74) Representative: Eisenführ Speiser
(86) International application number: PCT/JP2023/020500
(87) International publication number: WO 2024/047984

(57) **Abstract**

A disclosed electrode plate 21 includes: a band-shaped core body 22 having a first principal surface 23 and a second principal surface 24; and an active material layer 27 formed on each of the first principal surface 23 and the second principal surface 24. The core body 22 includes a double-side coated part 25 on which the active material layer 27 is formed on each of the first principal surface 23 and the second principal surface 24, and an exposed part 26 provided continuously with the double-side coated part 25 and on which the active material layer 27 is not formed at least on the first principal surface 23. The first principal surface 23 on the exposed part 26 has an identification indication part 28 formed thereon in a region within 90% of an area located toward a center in a width direction of the core body 22. Thus, it is possible to accurately form an identification indication part.

## Description

### [Technical Field]

The present disclosure relates to an electrode plate, an electrode body, and a battery.

### [Background Art]

Conventionally, techniques for indicating information on electrode plates included in batteries are known (e.g., Patent Literature 1). An electrode plate described in Patent Literature 1 includes a band-shaped core body, and active material layers formed on both sides of the core body. The core body includes an exposed part to which a current collector lead is connected, and an identification indication part that enables identification of a manufacturing process history is formed on a portion of the exposed part.

### [Citation List]

### [Patent Literature]

Patent Literature 1: WO 2019/193869

### [Summary of Invention]

### [Technical Problem]

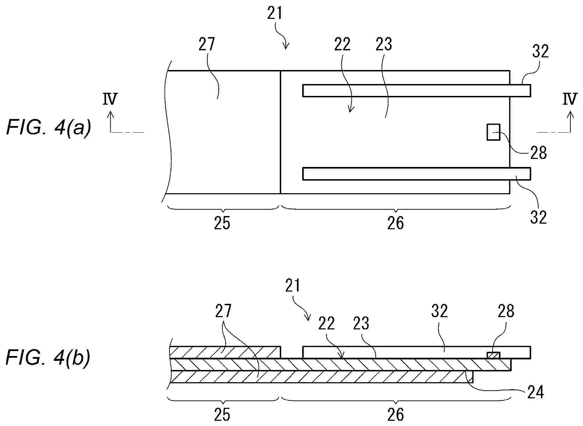

However, the identification indication part described in Patent Literature 1 is disposed in a region located toward an end portion of the exposed part (toward one end of the core body in the width direction thereof), as shown in, for example, FIG. 4 of the literature. The region located toward the end portion of the exposed part is likely to bend during a process of forming the identification indication part, and it is not easy to accurately form the identification indication part in such a region that is likely to bend. Under such circumstances, it is an object of the present disclosure to accurately form an identification indication part.

### [Solution to Problem]

An aspect of the present disclosure relates to an electrode plate. The electrode plate includes: a band-shaped core body having a first principal surface and a second principal surface; and an active material layer formed on each of the first principal surface and the second principal surface, wherein the core body includes a double-side coated part on which the active material layer is formed on each of the first principal surface and the second principal surface, and an exposed part provided continuously with the double-side coated part and on which the active material layer is not formed on at least the first principal surface, and the first principal surface on the exposed part has an identification indication part formed thereon in a region within 90% of an area located toward a center in a width direction of the core body.

Another aspect of the present disclosure relates to an electrode body. The electrode body includes: a first electrode plate and a second electrode plate that are wound with a separator interposed therebetween, wherein the first electrode plate is the above-described electrode plate.

Yet another aspect of the present disclosure relates to a battery. The battery includes: the above-described electrode body; and a bottomed tubular exterior can that accommodates the electrode body.

### [Advantageous Effects of Invention]

According to the present disclosure, it is possible to accurately form an identification indication part.

While the novel features of the invention are set forth in the appended claims, the invention, both as to organization and content, will be better understood and appreciated, along with other objects and features thereof, from the following detailed description taken in conjunction with the drawings.

### [Brief Description of Drawings]

[FIG. 1] A vertical cross-sectional view schematically showing a battery according to Embodiment 1.
[FIG. 2] A perspective view schematically showing an electrode body according to Embodiment 1.
[FIG. 3] Views schematically showing a first electrode plate (electrode plate) according to Embodiment 1, with FIG. 3(a) showing a plan view, and FIG. 3(b) showing a cross-sectional view taken along the line III-III.
[FIG. 4] Views schematically showing a first electrode plate (electrode plate) according to Embodiment 2, with FIG. 4(a) showing a plan view, and FIG. 4(b) showing a cross-sectional view taken along the line IV-IV.
[FIG. 5] Views schematically showing a first electrode plate (electrode plate) according to Embodiment 3, with FIG. 5(a) showing a plan view, and FIG. 5(b) showing a cross-sectional view taken along the line V-V

### [Description of Embodiments]

Embodiments of the electrode plate, the electrode body, and the battery according to the present disclosure will be described below by way of examples. However, the present disclosure is not limited to the examples described below. Although examples of specific numerical values and materials may be given in the following description, other numerical values and materials may be used as long as the effects of the present disclosure can be achieved.

### (Electrode Plate)

An electrode plate according to the present disclosure includes a band-shaped core body, and an active material layer. Although the following description will be given, taking, as an example, an electrode plate for use in a non-aqueous electrolyte secondary battery (e.g., a lithium ion secondary battery), the use of the electrode plate is not limited thereto. Note that in the present disclosure, a power storage device (e.g., a lithium ion capacitor) in which at least one of a positive electrode and a negative electrode is an electrode that develops a capacity by a Faradaic reaction also falls under the category of secondary batteries.

The core body has a first principal surface and a second principal surface. When the electrode plate is used as a positive electrode plate, the core body may be, for example, a metal foil made of aluminum, an aluminum alloy, stainless steel, titanium, a titanium alloy, or the like. When the electrode plate is used as a negative electrode plate, the core body may be, for example, a metal foil made of copper, a copper alloy, nickel, a nickel alloy, or the like.

The active material layer is formed on each of the first principal surface and the second principal surface of the core body. When the electrode plate is used as a positive electrode plate, the active material layer is a positive electrode active material layer, and may contain, in addition to a positive electrode active material, a conductive agent, a binder, a thickener, and the like. When the electrode plate is used as a negative electrode plate, the active material layer is a negative electrode active material layer, and may contain, in addition to a negative electrode active material, a conductive agent, a binder, a thickener, and the like.

For example, examples of the positive electrode active material that can be used include composite metal oxides of lithium and transition metals such as cobalt, manganese, and nickel. The positive electrode active materials may be used alone or in a combination of two or more. Examples of the negative electrode active material include carbon materials such as natural graphite, spherical or fibrous artificial graphite, non-graphitizable carbon (hard carbon), and graphitizable carbon (soft carbon).

Carbon black such as acetylene black, Ketjen black, channel black, furnace black, lamp black, and thermal black; conductive fibers such as carbon fibers and metal fibers, and the like can be used as the conductive agent. Various graphites such as natural graphite and artificial graphite can also be used as the conductive agent of the positive electrode.

The binder is not particularly limited as long as the binder can be dissolved or dispersed in a dispersing medium through kneading. Examples of the binder include a fluorocarbon resin, rubbers, an acrylic polymer or a vinyl polymer (a homopolymer or copolymer of monomers, including, an acrylic monomer such as methyl acrylate and acrylonitrile, and a vinyl monomer such as vinyl acetate). Examples of the fluorocarbon resin include polyvinylidene fluoride, a copolymer of vinylidene fluoride and hexafluoropropylene, and polytetrafluoroethylene. Examples of the rubbers include an acrylic rubber, a modified acrylonitrile rubber, and a styrenebutadiene rubber (SBR). The binders may be used alone or in a combination of two or more. In general, a fluorocarbon resin is preferred as the binder of the positive electrode, and a fluorocarbon resin and rubbers are preferred as the binder of the negative electrode.

The above-described core body includes a double-side coated part, and an exposed part provided continuously with the double-side coated part. The double-side coated part has the active material layer formed on each of the first principal surface and the second principal surface. The exposed part does not have the active material layer formed thereon at least on the first principal surface. For example, the exposed part may be a single-side coated part on which the active material layer is not formed on the first principal surface while the active material layer is formed on the second principal surface, a double-side exposed part on which the active material layer is not formed on the first principal surface and the second principal surface, or a combination of the single-side coated part and the double-side exposed part. The exposed part may be disposed on one end of the core body in the longitudinal direction thereof.

The first principal surface of the exposed part has an identification indication part formed thereon in a region within 90% of an area located toward the center in the width direction of the core body (hereinafter also referred to as a region A). The region A can also be regarded as a region of the first principal surface on the exposed part, other than a region in 5% of an area located toward one end and a region in 5% of an area located toward the other end in the width direction of the core body. The region A is less likely to bend during the process of forming the identification indication part, and it is thus possible to accurately form the identification indication part. The identification indication part may be an identification indication part that enables identification of a manufacturing process history. The identification indication part may be, but is not limited to, a QR code (registered trademark), which is a two-dimensional code. For example, the identification indication part may be composed of number, characters, or a combination of numbers and characters, or may be composed of projections, holes, or a combination of projections and holes. The identification indication part may be a one-dimensional code such as a bar code. The identification indication part may be formed, for example, by irradiating the first principal surface of the exposed part with laser.

The first principal surface on the exposed part may have the identification indication part formed thereon in a region within 80%, 70%, 60%, 50%, 40%, or 30% of an area located toward the center in the width direction of the core body. This enables the identification indication part to be formed even more accurately. Note that a region within X% of an area located toward the center refers to a collection of points that include a central point in the width direction of the core body, and that are symmetrical with respect to the central point in the width direction of the core body.

The second principal surface on the exposed part may have the active material layer formed thereon at a position at which the identification indication part is formed. That is, a region of the exposed part in which the identification indication part is formed may be the above-described single-side coated part. With this configuration, the strength of the region in which the identification indication part is formed can be increased by the active material layer formed on the second principal surface. The region in which the identification indication part is formed is further less likely to bend, so that the identification indication part can be even more accurately formed.

The second principal surface on the exposed part may not have the active material layer formed thereon at the position at which the identification indication part is formed. That is, a region of the exposed part in which the identification indication part is formed may be the above-described double-side exposed part. Such a double-side exposed part may be disposed at one end of the core body in the longitudinal direction thereof.

The identification indication part may be formed on the exposed part in a region (hereinafter also referred to as a region B) within 30% of an area located toward the double-side coated part in the longitudinal direction of the core body. The region B is present in the vicinity of the double-side coated part having a high strength due to the active material layers formed on both sides thereof, and therefore is further less likely to bend during the process of forming the identification indication part. Accordingly, the identification indication part can be even more accurately formed in the region B.

In the thickness direction of the core body, the height dimension of the identification indication part may be smaller than the height dimension of the active material layer. With this configuration, for example, when the electrode plate interferes with another member (e.g., an exterior can of a battery), the identification indication part having a smaller height dimension than the active material layer is less likely to come into direct contact with the other member. Thus, it is possible to suppress the identification indication part from being deformed or damaged.

### (Electrode Body)

An electrode body according to the present disclosure includes a first electrode plate and a second electrode plate that are wound with a separator interposed therebetween. That is, the electrode body according to the present disclosure is a wound electrode body. The first electrode plate is the above-described electrode plate. The first electrode plate may be a negative electrode plate or a positive electrode plate. The separator may be formed in a band shape. A polyolefin-based material, or a porous film of a combination of a polyolefin-based material and a heat resistant material can be used as the material of the separator. Examples of the porous film of a polyolefin-based material include porous films of polyethylene, polypropylene, and an ethylene-propylene copolymer. Theses resins may be used alone or in a combination of two or more. If necessary, another thermoplastic polymer may be used in combination with polyolefin. Examples of the heat resistant material include a heat-resistant resin and an inorganic filler. The porous film may be a monolayer film or a multilayer film. The multilayer film may include a film of a mixture of a heat-resistant resin and an inorganic filler.

At a winding end portion of the electrode body, a first region is present in which the first electrode plate is wound while the second electrode plate is not wound. The identification indication part may be disposed in the first region. That is, at the winding end portion of the electrode body, the winding of the second electrode plate is completed before the first region, and the identification indication part is disposed in the first region in which the first electrode plate and the second electrode plate do not overlap. With this configuration, even if the identification indication part formed on the first electrode plate undergoes oxidation or deformation, the oxidation or the deformation will not result in a nonuniform reaction between the first electrode plate and the second electrode plate, so that the safety of the electrode body in terms of the design can be maintained.

The electrode body may further include a pair of tapes that are attached to the first electrode plate, and that hold the electrode body in a wound state. The pair of tapes may be disposed toward both ends, respectively, of the first electrode plate in a width direction thereof. The identification indication part may be disposed between the pair of tapes. The region between the pair of tapes is less likely to bend during the process of forming the identification indication part, so that the identification indication part can be accurately formed. In the width direction of the first electrode plate, the dimension of each of the tapes may be, for example, 3 mm or more and 10 mm or less. In the width direction of the first electrode plate, the dimension of each of the tapes may be, for example, 5% or more and 15% or less of the dimension of the first electrode plate.

In the thickness direction of the first electrode plate, the height dimension of the identification indication part may be smaller than the height dimension of the pair of tapes. With this configuration, for example, when the electrode body interferes with another member (e.g., an exterior can of a battery), the identification indication part having a smaller height dimension than the pair of tapes is less likely to come into direct contact with the other member. Thus, it is possible to suppress the identification indication part from being deformed or damaged.

### (Battery)

A battery according to the present disclosure includes the above-described electrode body, and a bottomed tubular exterior can that accommodates the electrode body. The exterior can may be bottomed tubular or bottomed rectangular tubular. The first principal surface of the exposed part of the core body may be in contact with an inner surface of the exterior can. The exterior can may accommodate a non-aqueous electrolyte together with the electrode body. The non-aqueous electrolyte can be prepared by dissolving a lithium salt in a non-aqueous solvent. Examples of the non-aqueous solvent include cyclic carbonate such as ethylene carbonate, propylene carbonate, and butylene carbonate; chain carbonate such as dimethyl carbonate and diethyl carbonate; and lactone such as γ-butyrolactone. The non-aqueous solvents may be used alone or in a combination of two or more.

Examples of the lithium salt include strongly electron-withdrawing lithium salts such as LiPF₆, LiBF₄, LiClO₄, LiAsF₆, LiCF₃SO₃, LiN(SO₂CF₃)₂, LiN(SO₂C₂F₅)₂, and LiC(SO₂CF₃)₃. The lithium salts may be used alone or in a combination of two or more. The concentration of the lithium salt in the non-aqueous electrolyte is, for example, 0.5 to 1.5 M, and preferably 0.7 to 1.2 M.

The non-aqueous electrolyte may contain additives as appropriate. For example, in order for good films to be formed on the positive and negative electrodes, vinylene carbonate (VC), cyclohexylbenzene (CHB), and modified forms thereof may be used. For example, terphenyl, cyclohexylbenzene, and diphenyl ether may be used as additives that act when non-aqueous electrolyte secondary batteries are overcharged. The additives may be used alone or in a combination of two or more. The rates of these additives are are not particularly limited, but are, for example, about 0.05 to 10 wt% with respect to the non-aqueous electrolyte.

As described thus far, according to the present disclosure, it is possible to accurately form an identification indication part by using a portion of an electrode plate that is less likely to bend.

In the following, examples of the electrode plate, the electrode body, and the battery according to the present disclosure will be described in detail with reference to the drawings. The above-described constituent elements can be applied to constituent elements of the examples of the electrode plate, the electrode body, and the battery described below. The constituent elements of the electrode plate, the electrode body, and the battery described below can be changed based on the above-described description. The matters described below may be applied to the above-described embodiment. Of the constituent elements of the examples of the electrode plate, the electrode body, and the battery described below, constituent elements that are not essential to the electrode plate, the electrode body, and the battery according to the present disclosure may be omitted. Note that the drawings described below are schematic views, and do not accurately reflect the actual shapes and the actual numbers of members.

### <<Embodiment 1>>

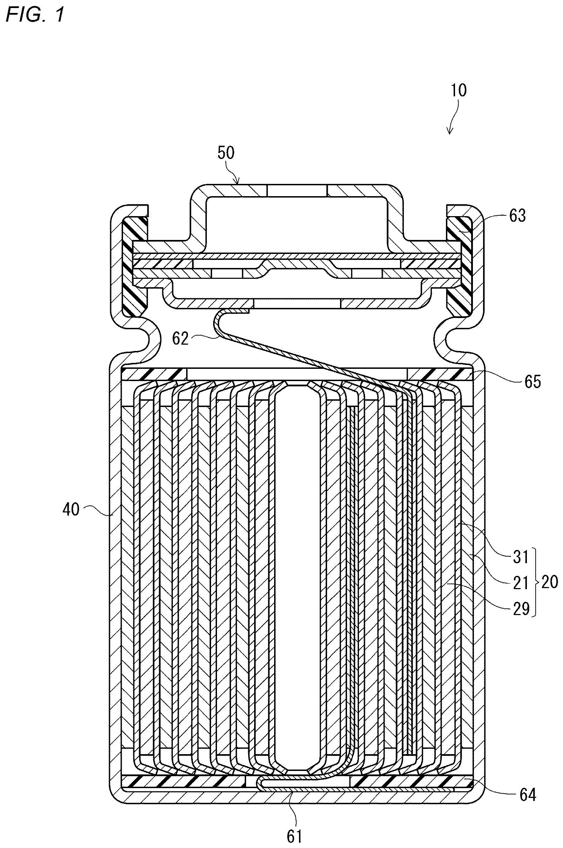

Embodiment 1 of the present disclosure will now be described. A battery 10 according to the present embodiment is configured as a lithium ion secondary battery; however, the present disclosure is not limited thereto. As shown in FIGS. 1 to 3, the battery 10 includes a wound electrode body 20, a bottomed cylindrical exterior can 40, and a sealing plate 50.

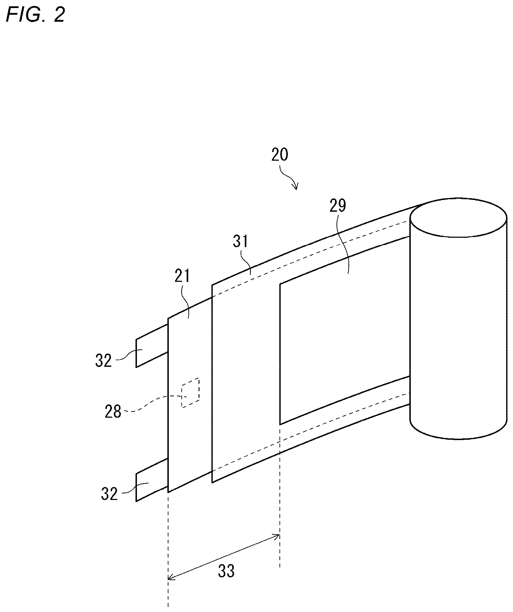

The electrode body 20 is formed by winding a first electrode plate 21 and a second electrode plate 29 each having a band shape, with a band-shaped separator 31 interposed therebetween. In addition, the electrode body 20 includes a pair of tapes 32 that are disposed toward both ends, respectively, (toward upper and lower ends in FIG. 2) of the first electrode plate 21 in the width direction thereof, and that hold the electrode body 20 in a wound state. In the present embodiment, the first electrode plate 21 is a negative electrode, and the second electrode plate 29 is a positive electrode; however, the present disclosure is not limited thereto. The first electrode plate 21 is exposed at the entire perimeter of an outermost peripheral portion of the electrode body 20; however, the present disclosure is not limited thereto. At the outermost peripheral portion of the electrode body 20, a first principal surface 23 of a core body 22 (described below) included in the first electrode plate 21 is in contact with an inner surface of the exterior can 40.

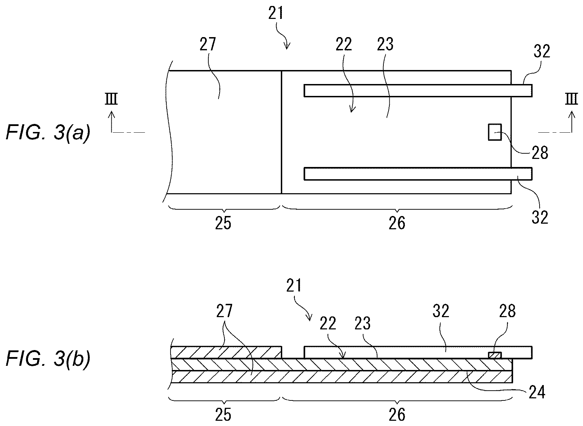

As shown in FIG. 3, the first electrode plate 21 includers a band-shaped core body 22 having a first principal surface 23 and a second principal surface 24, and a first active material layer 27 formed on each of the first principal surface 23 and the second principal surface 24. The first active material layer 27 of the present embodiment is a negative electrode active material layer. The first electrode plate 21 is an example of the electrode plate, and the first active material layer 27 is an example of the active material layer.

The core body 22 includes a double-side coated part 25 on which the first active material layer 27 is formed on each of the first principal surface 23 and the second principal surface 24, and an exposed part 26 provided continuously with the double-side coated part 25 and on which the first active material layer 27 is not formed on the first principal surface 23. The first active material layer 27 is formed on the entire length of the second principal surface 24 on the exposed part 26. Accordingly, at a position at which an identification indication part 28 described below is formed, the first active material layer 27 is formed on the second principal surface 24 on the exposed part 26. The core body 22 is formed of, for example, a copper foil or a copper alloy foil.

The first principal surface 23 of the exposed part 26 has an identification indication part 28 formed thereon in a region within 90% of an area located toward the center (e.g., a region within 40% of an area located toward the center) in the width direction of the core body 22, the identification indication part 28 enabling identification of a manufacturing process history. Here, at a winding end portion of the electrode body 20, a first region 33 is present in which the first electrode plate 21 is wound while the second electrode plate 29 is not wound. The identification indication part 28 is disposed in the first region 33. Also, the identification indication part 28 is disposed between the pair of tapes 32. In the thickness direction (the vertical direction in FIG. 3(b)) of the first electrode plate 21, the height dimension of the identification indication part 28 is smaller than the height dimension of the first active material layer 27 and the height dimension of the pair of tapes 32. Although FIG. 3(b) illustrates the identification indication part 28 as protruding from the first principal surface 23, the identification indication part 28 need not protrude from the first principal surface 23.

Although not shown in the drawings, the second electrode plate 29 includes a band-shaped core body having two principal surfaces, and a second active material layer formed on each of the principal surfaces. The core body is formed of, for example, an aluminum foil or an aluminum alloy foil. The second active material layer according to the present embodiment is a positive electrode active material layer. In the present embodiment, the length dimension of the second electrode plate 29 is smaller than the length dimension of the first electrode plate 21; however, the present disclosure is not limited thereto.

The exterior can 40 accommodates the electrode body 20 and a non-aqueous electrolyte (not shown). The exterior can 40 is made of metal, and is formed in a bottomed cylindrical shape having an opening at one end (the upper end in FIG. 1). A first lead 61 connected to the first electrode plate 21 is connected to a bottom surface of the exterior can 40. Accordingly, the exterior can 40 according to the present embodiment functions as an external negative electrode terminal. A ring-shaped first insulating plate 64 is provided between an inner bottom surface of the exterior can 40 and the electrode body 20.

The sealing plate 50 seals the opening of the exterior can 40. A gasket 63 is disposed on a peripheral edge portion of the sealing plate 50, and the opening end portion of the exterior can 40 is crimped together with the gasket 63, whereby the interior of the exterior can 40 is hermetically sealed. The sealing plate 50 is electrically connected to the second electrode plate 29 via a second lead 62. Thus, the sealing plate 50 of the present embodiment functions as an external positive electrode terminal. A ring-shaped second insulating plate 65 is provided between the sealing plate 50 and the electrode body 20.

### <<Embodiment 2>>

Embodiment 2 of the present disclosure will now be described. A battery 10 according to the present embodiment differs from Embodiment 1 described above with regard to the configuration of the first electrode plate 21. The following description focuses mainly on differences from Embodiment 1 described above.

As shown in FIG. 4, the exposed part 26 of the first electrode plate 21 does not have the first active material layer 27 formed thereon at a portion of the second principal surface 24. The identification indication part 28 is formed on the first principal surface 23 at a portion thereof located on the back side of the portion of the second principal surface 24 on which the first active material layer 27 is not formed. That is, at the position at which the identification indication part 28 is formed, the first active material layer 27 is not formed on the second principal surface 24 on the exposed part 26. Alternatively, of the single-side coated part and the double-side exposed part of the exposed part 26, the identification indication part 28 is formed on the latter.

### <<Embodiment 3>>

Embodiment 3 of the present disclosure will now be described. A battery 10 according to the present embodiment differs from Embodiment 1 described above with regard to the configuration of the first electrode plate 21. The following description focuses mainly on differences from Embodiment 1 described above.

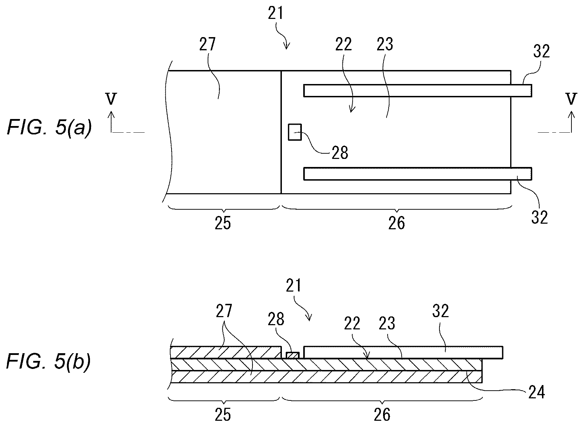

As shown in FIG. 5, the identification indication part 28 is disposed in the vicinity of the double-side coated part 25. Specifically, the identification indication part 28 is formed in a region within 30% of an area located toward the double-side coated part 25 (preferably a region within 20% of an area located toward the double-side coated part 25) of the exposed part 26 in the longitudinal direction (the lateral direction in FIG. 5) of the core body 22.

### <<Supplementary Notes>>

The above description of the embodiments discloses the following techniques.

### (Technique 1)

An electrode plate including:
a band-shaped core body having a first principal surface and a second principal surface; and
an active material layer formed on each of the first principal surface and the second principal surface, wherein
the core body includes a double-side coated part on which the active material layer is formed on each of the first principal surface and the second principal surface, and an exposed part provided continuously with the double-side coated part and on which the active material layer is not formed on at least the first principal surface, and
the first principal surface on the exposed part has an identification indication part formed thereon in a region within 90% of an area located toward a center in a width direction of the core body.

### (Technique 2)

The electrode plate according to technique 1, wherein the second principal surface on the exposed part has the active material layer formed thereon at a position at which the identification indication part is formed.

### (Technique 3)

The electrode plate according to technique 1, wherein the second principal surface on the exposed part does not have the active material layer formed thereon at a position at which the identification indication part is formed.

### (Technique 4)

The electrode plate according to any one of techniques 1 to 3, wherein the identification indication part is formed on the exposed part in a region within 30% of an area located toward the double-side coated part in a longitudinal direction of the core body.

### (Technique 5)

The electrode plate according to any one of techniques 1 to 4, wherein, in a thickness direction of the core body, a height dimension of the identification indication part is smaller than a height dimension of the active material layer.

### (Technique 6)

An electrode body including:
a first electrode plate and a second electrode plate that are wound with a separator interposed therebetween, wherein
the first electrode plate is the electrode plate according to any one of techniques 1 to 5.

### (Technique 7)

The electrode body according to technique 6, wherein,
at a winding end portion of the electrode body, a first region is present in which the first electrode plate is wound while the second electrode plate is not wound, and
the identification indication part is disposed in the first region.

### (Technique 8)

The electrode body according to technique 6 or 7, further including
a pair of tapes that are attached to the first electrode plate, and that hold the electrode body in a wound state, wherein
the pair of tapes are disposed toward both ends, respectively, of the first electrode plate in a width direction thereof, and
the identification indication part is disposed between the pair of tapes.

### (Technique 9)

The electrode body according to technique 8, wherein, in a thickness direction of the first electrode plate, a height dimension of the identification indication part is smaller than a height dimension of the pair of tapes.

### (Technique 10)

A battery including:
the electrode body according to any one of techniques 6 to 9; and
a bottomed tubular exterior can that accommodates the electrode body.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The present disclosure is applicable to electrode plates, electrode assemblies, and batteries.

### [Reference Signs List]

10: Battery
20: Electrode body
   21: First electrode plate (electrode plate)
      22: Core body
         23: First principal surface
         24: Second principal surface
         25: Double-side coated part
         26: Exposed part
      27: First active material layer (active material layer)
      28: Identification indication part
   29: Second electrode plate
   31: Separator
   32: Tape
   33: First region
40: Exterior can
50: Sealing plate
61: First lead
62: Second lead
63: Gasket
64: First insulating plate
65: Second insulating plate

## Claims

1. An electrode plate comprising:
a band-shaped core body having a first principal surface and a second principal surface; and
an active material layer formed on each of the first principal surface and the second principal surface, wherein
the core body includes a double-side coated part on which the active material layer is formed on each of the first principal surface and the second principal surface, and an exposed part provided continuously with the double-side coated part and on which the active material layer is not formed on at least the first principal surface, and
the first principal surface on the exposed part has an identification indication part formed thereon in a region within 90% of an area located toward a center in a width direction of the core body.

2. The electrode plate according to claim 1, wherein the second principal surface on the exposed part has the active material layer formed thereon at a position at which the identification indication part is formed.

3. The electrode plate according to claim 1, wherein the second principal surface on the exposed part does not have the active material layer formed thereon at a position at which the identification indication part is formed.

4. The electrode plate according to any one of claims 1 to 3, wherein the identification indication part is formed on the exposed part in a region within 30% of an area located toward the double-side coated part in a longitudinal direction of the core body.

5. The electrode plate according to any one of claims 1 to 3, wherein, in a thickness direction of the core body, a height dimension of the identification indication part is smaller than a height dimension of the active material layer.

6. An electrode body comprising:
a first electrode plate and a second electrode plate that are wound with a separator interposed therebetween, wherein
the first electrode plate is the electrode plate according to any one of claims 1 to 3.

7. The electrode body according to claim 6, wherein,
at a winding end portion of the electrode body, a first region is present in which the first electrode plate is wound while the second electrode plate is not wound, and
the identification indication part is disposed in the first region.

8. The electrode body according to claim 6, further comprising
a pair of tapes that are attached to the first electrode plate, and that hold the electrode body in a wound state, wherein
the pair of tapes are disposed toward both ends, respectively, of the first electrode plate in a width direction thereof, and
the identification indication part is disposed between the pair of tapes.

9. The electrode body according to claim 8, wherein, in a thickness direction of the first electrode plate, a height dimension of the identification indication part is smaller than a height dimension of the pair of tapes.

10. A battery comprising:
the electrode body according to claim 6; and
a bottomed tubular exterior can that accommodates the electrode body.
